(19) Europäisches Patentamt
European Patent Office
Office européen des brevets

(11) **EP 4 443 636 A1**

(12) **EUROPEAN PATENT APPLICATION**
published in accordance with Art. 153(4) EPC

(43) Date of publication:
**09.10.2024 Bulletin 2024/41**

(51) International Patent Classification (IPC):
*H01M 50/528* (2021.01)    *H01M 50/184* (2021.01)

(21) Application number: **21965908.3**

(52) Cooperative Patent Classification (CPC):
**H01M 50/184; H01M 50/528;** Y02E 60/10

(22) Date of filing: **30.11.2021**

(86) International application number:
**PCT/CN2021/134473**

(87) International publication number:
**WO 2023/097466 (08.06.2023 Gazette 2023/23)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventor: **YAN, Dongyang
Ningde, Fujian 352100 (CN)**

(74) Representative: **Klunker IP
Patentanwälte PartG mbB
Destouchesstraße 68
80796 München (DE)**

(54) **HARD CASE BATTERY AND ELECTRONIC DEVICE**

(57)     This application relates to the field of batteries and discloses a hard shell battery (1) and an electronic apparatus (2). The hard shell battery includes a housing, an electrode assembly (200), a first gasket (300), a second gasket (400), a conductive member (500), and a fastening member (600). The housing is provided with an accommodating cavity. The first gasket is disposed on an outer surface of the housing, and the second gasket is disposed on an inner surface of the housing. The conductive member is electrically connected to the electrode assembly, a shaft portion (510) of the conductive member extends into the accommodating cavity, and the housing is provided with a through hole for passage of the shaft portion. A restraint portion (520) of the conductive member abuts on a side of the first gasket facing away from the accommodating cavity. The fastening member is disposed on a side of the second gasket facing away from the first gasket, and in interference fit with the shaft portion via a mounting hole. The conductive member and the fastening member jointly press against the second gasket, and the conductive member and the housing jointly press against the first gasket, to seal the through hole. The hard shell battery can change a current situation in which a housing of an existing hard shell battery needs to be divided into at least two parts insulated from each other to form two conductive terminals.

FIG. 3

## Description

## TECHNICAL FIELD

Some embodiments of this application relate to the field of battery technologies, and in particular, to a hard shell battery and an electronic apparatus.

## BACKGROUND

A battery is an apparatus that converts external energy into electrical energy and that stores the electrical energy in the battery, to supply power to an external device (for example, a portable electronic device) as needed. Currently, batteries are widely applied to electronic products such as mobile phones, tablets, and notebook computers.

Batteries are categorized into pouch batteries and hard shell batteries, both of which have various shapes. For example, hard shell batteries have a prismatic shape, a cylindrical shape, and a button shape. For example, a button cell includes a housing, an electrode assembly, and an electrolyte. The housing includes a base shell and a cover. The base shell is provided with an accommodating cavity, and the cover is disposed on the base shell to block an opening of the accommodating cavity. The electrode assembly is accommodated in the housing and includes a first electrode plate and a second electrode plate separated apart, and a separator disposed therebetween. One of the first electrode plate and the second electrode plate is connected to the base shell through an inner tab, so that the base shell forms one conductive terminal of the button cell; and the other one of the first electrode plate and the second electrode plate is connected to the cover through another inner tab, so that the cover forms the other conductive terminal of the button cell.

At least two parts insulated from each other, for example, the foregoing base shell and cover, need to be disposed on the housing of the foregoing hard shell battery, to form two conductive terminals of the hard shell battery. The two parts insulated from each other need to be bonded and fixed with an insulating adhesive, so that the two parts can be both fixed and insulated from each other. However, when temperature of such hard shell battery rises above specific preset temperature with prolongation of working time, or the hard shell battery is placed in an environment at temperature higher than the foregoing preset temperature and maintained at the temperature for a period of time, the foregoing adhesive is softened or partially melted. As a result, the hard shell battery has decreased airtightness at a mounting position of the top cover, namely the conductive terminal, leading to electrolyte leakage at such position.

## SUMMARY

Some embodiments of this application are intended to provide a hard shell battery and an electronic apparatus, to change a current situation in which at least two parts insulated from each other need to be disposed on an existing hard shell battery, to form two conductive terminals of the hard shell battery.

In some embodiments of this application, the following technical solution is used to resolve the foregoing technical problem.

According to a first aspect, this application provides a hard shell battery. The hard shell battery includes a housing, an electrode assembly, an insulative first gasket, an insulative second gasket, a conductive member, and a fastening member. The housing is provided with an accommodating cavity. The electrode assembly is accommodated in the accommodating cavity. The first gasket is disposed on an outer surface of the housing, and the second gasket is disposed on an inner surface of the housing. The conductive member includes a shaft portion and a restraint portion. The shaft portion passes through the first gasket, a wall portion of the housing, and the second gasket and extends into the accommodating cavity, and the housing is provided with a through hole for passage of the shaft portion. An end of the shaft portion facing away from the accommodating cavity extends outward to form the restraint portion, the restraint portion abuts on a side of the first gasket facing away from the accommodating cavity, and the conductive member is electrically connected to the electrode assembly. The fastening member is disposed on a side of the second gasket facing away from the first gasket, and provided with a mounting hole, the shaft portion is in an interference fit with the mounting hole, and the conductive member and the fastening member jointly press against the second gasket and the conductive member and the housing jointly press against the first gasket, to seal the through hole.

Compared with currently commercially available hard shell batteries, the hard shell battery includes the housing, the first gasket, the second gasket, the conductive member, and the fastening member. The conductive member penetrates through the wall portion of the housing, is connected to the electrode assembly, and forms one conductive terminal of the hard shell battery. Because the conductive member forms a conductive terminal of the hard shell battery, the housing of the hard shell battery may not necessarily be divided into two parts insulated from each other to form two conductive terminals. That is, the hard shell battery provided in some embodiments of this application can change a current situation in which a housing of an existing hard shell battery needs to be divided into at least two parts insulated from each other to form two conductive terminals.

In addition, because in the hard shell battery, the conductive member and the fastening member jointly press against the second gasket and the conductive member and the housing jointly press against the first gasket, to seal the foregoing through hole, the clamping force is less affected or even basically unaffected by an increase in temperature of the hard shell battery. Therefore, compared with the currently commercially available battery cells that are likely to experience electrolyte leakage at the mounting position of top covers, namely, conductive terminals, the hard shell battery provided in some embodiments of this application is less likely to experience electrolyte leakage at the mounting position of the conductive member.

In some embodiments, tensile strength of the conductive member is $Rm_1$, a cross-sectional area of the shaft portion in a direction perpendicular to a first direction is $S_1$, tensile strength of the fastening member is $Rm_2$, a cross-sectional area of the fastening member in a direction perpendicular to the first direction is $S_2$, and the first direction is an extension direction of the shaft portion. The conductive member and the fastening member satisfy $Rm_2 * S_2 > Rm_1 * S_1$.

Because impact resistance of shaft-hole fitting elements is positively correlated with tensile strength Rm of materials of the elements and cross-sectional areas S of the fitting portions, the conductive member and the fastening member are controlled to satisfy the foregoing relationship, which can better reduce a crack risk of the fastening member caused by pressing of the shaft portion during assembly.

In some embodiments, a cross-sectional area of the shaft portion in a direction perpendicular to a first direction is $S_1$, and a cross-sectional area of the fastening member in a direction perpendicular to the first direction is $S_2$. The conductive member and the fastening member satisfy $S_2 > S_1$.

Because both the tensile strength Rm of the material of the element and the cross-sectional area S of the fitting portion are positively correlated with impact resistance of the element, with $S_2$ controlled to be greater than $S_1$, it is ensured that impact resistance of the fastening member can still be greater than impact resistance of the conductive member even if the tensile strength of the fastening member is less than the tensile strength of the conductive member in some cases. In other words, setting $S_2$ to be greater than $S_1$ allows for more diversified and flexible selection of material for the fastening member.

In some embodiments, the shaft portion is cylindrical, and the fastening member is ring-shaped. A diameter of the shaft portion is $D_1$, a diameter of an outer contour of the fastening member is $D_2$, and the shaft portion and the fastening member satisfy

$$D_2/D_1 > \sqrt{2}$$
.

Because $D_2/D_1 > \sqrt{2}$, an area of the outer contour of the fastening member is greater than twice a cross-sectional area of the shaft portion. That is, the cross-sectional area of the fastening member excluding the mounting hole is greater than the cross-sectional area of the shaft portion.

In some embodiments, tensile strength of the fastening member is greater than tensile strength of the shaft portion.

Because both the tensile strength Rm of the material of the element and the cross-sectional area S of the fitting portion are positively correlated with impact resistance of the element, with $Rm_2$ controlled to be greater than $Rm_1$, it is ensured that impact resistance of the fastening member can still be greater than impact resistance of the conductive member even if the cross-sectional area $S_2$ of the fastening member at the fitting portion is less than the cross-sectional area $S_1$ of the conductive member at the fitting portion in some cases. In other words, setting $Rm_2$ to be greater than $Rm_1$ allows for a larger size tolerance of the fastening member during manufacture.

In some embodiments, projection of a peripheral contour of the restraint portion in a first direction falls on the first gasket, and/or projection of a peripheral contour of the fastening member in the first direction falls on the second gasket. The first direction is an extension direction of the shaft portion.

In this way, it can be ensured that the conductive member is located entirely on a side of the first gasket facing away from the through hole, to reduce a risk of contact between the edge of the conductive member and the housing; and/or it can be ensured that the fastening member is located entirely on a side of the second gasket facing away from the through hole, to reduce or avoid a risk of contact between the edge of the conductive member and the housing.

In some embodiments, the hard shell battery further includes an insulating sleeve. The insulating sleeve fits on the shaft portion and is between the first gasket and the second gasket. In this way, the shaft portion is separated from the housing via the insulating sleeve, thereby better avoiding contact between the shaft portion and the housing.

In some embodiments, the insulating sleeve is in an interference fit with the through hole. In this way, the insulating sleeve can not only separate the shaft portion from the housing, but also seal the through hole, thereby enhancing a sealing effect on the through hole.

In some embodiments, the insulating sleeve and the first gasket are integrally formed; and/or the insulating sleeve and the second gasket are integrally formed. When integrally formed, the insulating sleeve, the first gasket, and the second gasket jointly form an H-shaped sealing ring structure; and the sealing ring can clamp the wall portion of the housing via the first gasket and the second gasket, thereby facilitating assembly of the first gasket, the second gasket, and the insulating sleeve on the housing. In addition, integral formation of the first gasket, the second gasket, and the insulating sleeve can also effectively shorten assembly time, because the assembly of the first gasket, the second gasket, and the insulating sleeve can be completed through only one assembly operation in this case, but in a method of disposing the first gasket, the second gasket, and the insulating sleeve separately, the first gasket, the second gasket, and the insulating sleeve need to be separately assembled in sequence.

In some embodiments, the fastening member is a conductor. The hard shell battery further includes a first conductive sheet, one end of the first conductive sheet is electrically connected to the electrode assembly, and at least one of the shaft portion or the fastening member is electrically connected to the other end of the first conductive sheet. In this way, the electrode assembly, the first conductive sheet, and the conductive member are connected in sequence so that the conductive member forms a conductive terminal of the hard shell battery.

In some embodiments, the electrode assembly includes a first electrode plate, a second electrode plate, and a separator that are stacked, and the separator is disposed between the first electrode plate and the second electrode plate. The first conductive sheet is electrically connected to the first electrode plate. The housing is a conductor, the hard shell battery further includes a second conductive sheet, and the second conductive sheet is electrically connected to both the second electrode plate and the housing. In this way, the first electrode plate, the first conductive sheet, and the conductive member are connected in sequence so that the conductive member forms a conductive terminal of the hard shell battery; and the second electrode plate, the second conductive sheet, and the housing are connected in sequence so that the housing forms another conductive terminal of the hard shell battery.

According to a second aspect, an embodiment of this application further provides an electronic apparatus, where the electronic apparatus includes the hard shell battery in any one of the foregoing implementations. With the foregoing hard shell battery included, the electronic apparatus can also change a current situation in which a housing of an existing hard shell battery needs to be divided into at least two parts insulated from each other to form two conductive terminals.

**BRIEF DESCRIPTION OF DRAWINGS**

One or more embodiments are used as examples for description by using corresponding accompanying drawings. These example descriptions impose no limitation on some embodiments. Elements with a same reference sign in the accompanying drawings represent similar elements. Unless otherwise stated, the figures in the accompanying drawings impose no limitation on a scale.

FIG. 1 is a stereoscopic schematic diagram of a hard shell battery in a direction according to an embodiment of this application;
FIG. 2 is a top view of the hard shell battery in FIG. 1;
FIG. 3 is a schematic cross-sectional diagram of the hard shell battery in FIG. 2 along a line A-A; and

FIG. 4 is a schematic diagram of an electronic apparatus according to an embodiment of this application.

In which:

1. hard shell battery
100. housing; 110. base shell; 120. cover; 111. end wall; 112. side wall; 101. accommodating cavity; 102. through hole;
200. electrode assembly; 210. first electrode plate; 220. second electrode plate; 230. separator; 240. first conductive sheet; 250. second conductive sheet;
300. first gasket;
400. second gasket;
500. conductive member; 510. shaft portion; 520. restraint portion;
600. fastening member; 601. mounting hole;
700. insulating sleeve; and
2. electronic apparatus.

**DETAILED DESCRIPTION OF EMBODIMENTS**

For ease of understanding this application, the following further describes this application in detail with reference to the accompanying drawings and specific embodiments. It should be noted that when a component is referred to as being "fixed to", "fastened to", or "mounted to" another component, it may be directly fixed to the another component, or there may be one or more components therebetween. When an element is "connected to" another element, the element may be directly linked to the another element, or there may be one or more sandwiched elements between the elements. The terms "vertical", "horizontal", "left", "right", "inside", "outside", and similar expressions used in this specification are merely for description purposes.

Unless otherwise defined, all technical and scientific terms used herein shall have the same meanings as commonly understood by persons skilled in the art to which this application belongs. The terms used in the specification of this application are merely intended to describe specific embodiments but not to constitute any limitations on this application. The term "and/or" used in this specification includes any and all combinations of one or more associated items that are listed.

In addition, technical features mentioned in different embodiments of this application described below may be jointly combined, provided that they do not conflict with one another.

In this specification, "mounting" includes fixing or limiting an element or apparatus to a specific location or place by means of welding, screwing, clamping, bonding, or the like. The element or apparatus may stay still at the specific position or place, or may move within a limited range. After being fixed or limited to the specific position or place, the element or apparatus can be disassembled or cannot be disassembled. This is not limited in some embodiments of this application.

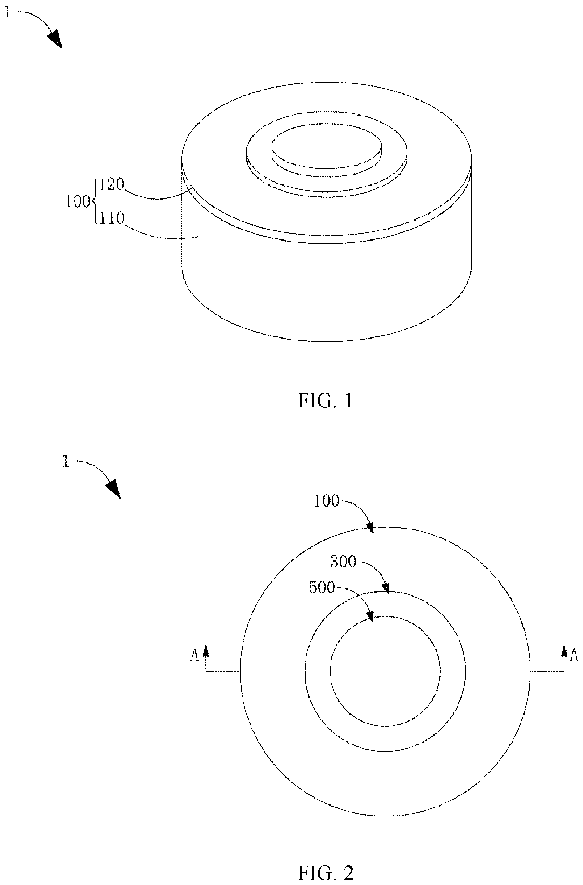

Referring to FIG. 1 to FIG. 3, FIG. 1 to FIG. 3 are respectively a stereoscopic schematic diagram, a top view, and a schematic cross-sectional diagram along a line A-A of a hard shell battery 1 according to an embodiment of this application. The hard shell battery 1 includes a housing 100, an electrode assembly 200, an insulative first gasket 300, an insulative second gasket 400, a conductive member 500, and a fastening member 600. The housing 100 is a mounting base of the foregoing structures and also serves as a container for the electrode assembly 200 and an electrolyte, and is provided with an accommodating cavity 101. The electrode assembly 200 is accommodated in the foregoing accommodating cavity 101. The first gasket 300 is disposed on an outer surface of the housing 100, and the second gasket 400 is disposed on an inner surface of the housing. The conductive member 500 is electrically connected to the electrode assembly 200 and includes a shaft portion 510 and a restraint portion 520. The shaft portion 510 passes through the first gasket 300, a wall portion of the housing 100, and the second gasket 400 in sequence and extends into the accommodating cavity 101; and the housing 100 is provided with a through hole 102 for passage of the shaft portion 510. An end of the shaft portion 510 facing away from the accommodating cavity 101 extends outward to form the restraint portion 520, and the restraint portion 520 abuts on a side of the first gasket 300 facing away from the accommodating cavity 101. The fastening member 600 is disposed on a side of the second gasket 400 facing away from the first gasket 300, and provided with a mounting hole 601, the shaft portion 510 is in an interference fit with the mounting hole 601, and the conductive member 500 and the fastening member 600 jointly press against the second gasket 400 and the conductive member 500 and the housing 100 jointly press against the first gasket, to seal the through hole 102. Next, an example of using a button cell as the hard shell battery 1 is used to describe a specific structure of the hard shell battery 1. However, it should be understood that in another embodiment of this application, the hard shell battery 1 may alternatively be a battery in a prismatic shape, a cylindrical shape, or another shape. A specific shape of the hard shell battery is not limited in this application.

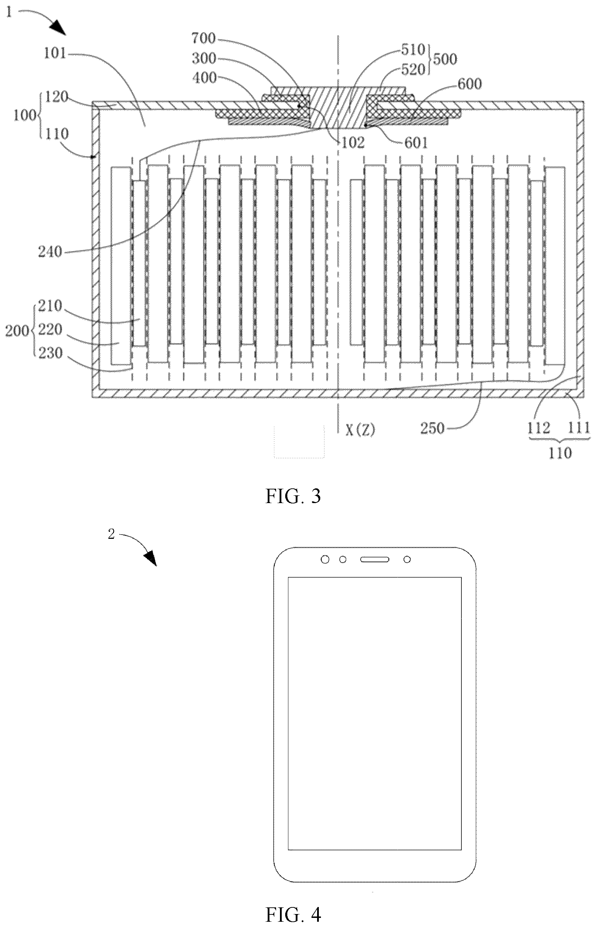

For the foregoing housing 100, referring to FIG. 3 specifically, with reference to FIG. 1 and FIG. 2, the housing 100 is provided with the accommodating cavity 101 for accommodating the electrode assembly 200, the electrolyte, and some other elements. Specifically, the housing 100 is in a cylindrical shape as a whole and includes a base shell 110 and a cover 120. The base shell 110 includes an end wall 111 and a side wall 112, where the end wall 111 is in a flat cylindrical shape, and the side wall 112 vertically extends from an edge of the end wall 111 to form a ring. The end wall 111 and the side wall 112 jointly form a box-like structure without a top cover and enclose the foregoing accommodating cavity 101. The cover 120 has a flat structure and covers an end of the side wall 112 facing away from the end wall 111 to block an opening of the foregoing accommodating cavity 101.

In this embodiment, the housing 100 is a conductor so that the housing 100 can easily form a conductive terminal of the hard shell battery 1. Specifically, both the base shell 110 and the cover 120 are conductors and fastened via welding. For example, in some embodiments, the base shell 110 and the cover 120 both are made of stainless steel and fixedly connected via laser welding. Certainly, in another embodiment of this application, alternatively, only the base shell 110 may be a conductor, or only the end wall 111 of the base shell 110 may be a conductor. This is not limited or described herein, as long as the housing 100 has a conductive part so that the conductive part of the housing 100 can form a conductive terminal of the hard shell battery 1.

For the foregoing electrode assembly 200, still referring to FIG. 3, the electrode assembly includes a first electrode plate 210, a second electrode plate 220, and a separator 230. The first electrode plate 210, the second electrode plate 220, and the separator 230 are stacked. Specifically, the first electrode plate 210 and the second electrode plate 220 have opposite polarities and are separated. The separator 230 is disposed between the first electrode plate and the second electrode plate to avoid a short circuit between the first electrode plate 210 and the second electrode plate 220. The stacked electrode assembly 200 is wound as a whole around an axis parallel to a preset direction Z shown in the figure into a columnar mechanism in a cylindrical shape or with an oblong cross-section, to be easily accommodated in the foregoing accommodating cavity 101. It can be understood that even though the electrode assembly 200 in this embodiment is a wound structure, in some other embodiments of this application, the electrode assembly 200 may alternatively be a laminated structure; and in this case, the first electrode plate 210 and the second electrode plate 220 are disposed alternately along the preset direction Z, and the separator 230 is disposed between the adjacent first electrode plate 210 and second electrode plate 220. A specific shape of the electrode assembly 200 is not limited in this application. It should be noted that the "preset direction" mentioned in this application refers to a determined direction pointing from one of the end wall 111 of the base shell 110 and the cover 120 to the other thereof.

For the foregoing first gasket 300 and second gasket 400, still referring to FIG. 3, both the first gasket 300 and the second gasket 400 are insulators, the first gasket 300 is disposed on an outer surface of the cover 120, the second gasket 400 is disposed on an inner surface of the cover 120, and the first gasket and the second gasket are disposed opposite each other in the foregoing preset direction Z. The first gasket 300 and the second gasket 400 are actually made of various materials. The first gasket 300 is used as an example. The material of the first gasket 300 may include at least one of the following materials: polytetrafluoroethylene, a modified substance of polytetrafluoroethylene, propylene glycol methyl ether acetate, a modified substance of propylene glycol methyl ether acetate, a small amount of a copolymer of perfluoro(propyl vinyl ether) and polytetrafluoroethylene, a small amount of a modified substance of a copolymer of perfluoro(propyl vinyl ether) and polytetrafluoroethylene, polypropylene, a modified substance of polypropylene, polyethylene, a modified substance of polyethylene, or a propylene-ethylene copolymer. Certainly, in another embodiment of this application, another suitable insulating material may alternatively be selected for the first gasket 300 and is not listed one by one herein. The material of the second gasket 400 is substantially the same as that of the first gasket 300. Details are not described herein again.

For the foregoing conductive member 500, still referring to FIG. 3, the conductive member 500 is a conductor and is configured to be electrically connected to the foregoing electrode assembly 200, to form a conductive terminal of the hard shell battery 1. In this embodiment, the conductive member 500 is a conductor and is T-shaped as a whole, and includes the shaft portion 510 and the restraint portion 520. Specifically, the shaft portion 510 is columnar as a whole; and along a direction from the first gasket 300 to the second gasket 400, the shaft portion 510 passes through the first gasket 300, the wall portion of the housing 100, and the second gasket 400 in sequence to extend into the accommodating cavity 101. Correspondingly, the housing 100 is provided with the through hole 102 for passage of the shaft portion 510. The restraint portion 520 is a ring structure extending outward from an edge of an end of the shaft portion 510 facing away from the accommodating cavity 101. The restraint portion 520 abuts on a side of the first gasket 300 facing away from the accommodating cavity 101 to press against the first gasket 300. The conductive member 500 and the first gasket 300 jointly cover the side of the through hole 102 facing towards outside of the hard shell battery 1, and the restraint portion 520 seals the side of the through hole 102 facing outwards by pressing against the first gasket 300.

Further, to reduce a risk of a short circuit caused by contact between the shaft portion 510 and the housing 100, the hard shell battery further includes an insulating sleeve 700. Specifically, still referring to FIG. 3, the insulating sleeve 700 fits on the shaft portion 510, and is between the first gasket 300 and the second gasket 400 to separate the shaft portion 510 from the housing 100, thereby better avoiding contact between the shaft portion 510 and the housing 100. Preferably, the insulating sleeve 700 not only tightly fits on the shaft portion 510, and but also is in an interference fit with the foregoing through hole 102. In this way, the insulating sleeve 700 can not only separate the shaft portion 510 from the housing 100, but also seal the through hole 102, thereby enhancing a sealing effect on the through hole 102. In this embodiment, the insulating sleeve 700, the first gasket 300, and the second gasket 400 are integrally formed to jointly form an H-shaped sealing ring structure; and the sealing ring can clamp the wall portion of the housing 100 via the first gasket 300 and the second gasket 400, thereby facilitating assembly of the first gasket 300, the second gasket 400, and the insulating sleeve 700. In addition, integral formation of the first gasket 300, the second gasket 400, and the insulating sleeve 700 can also effectively shorten assembly time, because the assembly of the first gasket, the second gasket, and the insulating sleeve can be completed through only one assembly operation in this case, but in a method of disposing the first gasket, the second gasket, and the insulating sleeve separately, the first gasket, the second gasket, and the insulating sleeve need to be separately assembled in sequence. It can be understood that in another embodiment of this application, one of the first gasket 300 and the second gasket 400 may alternatively be integrally formed with the insulating sleeve 700.

For the foregoing fastening member 600, still referring to FIG. 3, the fastening member 600 is disposed on a side of the second gasket 400 facing away from the foregoing through hole 102, and disposed corresponding to a position of the shaft portion 510. The fastening member 600 is provided with the mounting hole 601 fitting the foregoing shaft portion 510, and the mounting hole 601 may be a through hole shown in the figure or a blind hole that allows no pass-through. The shaft portion 510 is interference-fitted into the mounting hole 601 so that the conductive member 500 and the fastening member 600 are fastened to each other; and the restraint portion 520 and the fastening member 600 jointly press the first gasket 300 and the second gasket 400 along a first direction X shown in the figure to deformation, thereby sealing the through hole 102. The "first direction" mentioned in this application refers to an extension direction of the shaft portion 510 and is also a direction from the foregoing first gasket 300 to the second gasket 400 in this embodiment, that is, parallel to the foregoing preset direction Z. Certainly, in another embodiment of this application, the first direction X may alternatively form an included angle with the foregoing preset direction Z. For example, the foregoing first gasket 300, the second gasket 400, the conductive member 500, and the fastening member 600 are all disposed on the side wall of the base shell 110, and in this case, the first direction X is substantially perpendicular to the preset direction Z. In other words, even though the first gasket 300, the second gasket 400, the conductive member 500, and the fastening member 600 are all disposed on the foregoing cover 120 in this embodiment, this application is not limited thereto. In another embodiment of this application, the first gasket 300, the second gasket 400, the conductive member 500, and the fastening member 600 may alternatively be disposed on another portion of the housing 100. For example, in some other embodiments of this application, the foregoing structures are disposed on the side wall 112 or the end wall 111 of the base shell 110. For another example, in some other embodiments of this application, the hard shell battery 1 is a prismatic battery other than the button cell, and the foregoing structures can also be disposed at an appropriate position based on an actual need.

It should be noted that during a process of inserting the shaft portion 510 into the mounting hole 601, because the fastening member 600 is actually a hollow ring structure, specifically, as shown in FIG. 3, a region of the fastening member 600 around the mounting hole 601 may slightly deform in a direction leaving the through hole 102 when pressed by the shaft portion 510. If the fastening member 600 is cracked or broken when being assembled with the shaft portion 510, effectiveness of jointly pressing the first gasket 300 and the second gasket 400 by the fastening member 600 and the conductive member 500 may be affected, and then the hard shell battery 1 may experience electrolyte leakage at the through hole 102. The inventors have found that impact resistance of shaft-hole fitting elements is positively correlated with tensile strength Rm of materials of the elements and cross-sectional areas S of the fitting portions. Therefore, to reduce the foregoing risk, the fastening member 600 and the conductive member 500 in this embodiment satisfy the following relationship: $Rm_2 * S_2 > Rm_1 * S_1$. $Rm_1$ is tensile strength of the foregoing conductive member 500, $S_1$ is a cross-sectional area of the foregoing shaft portion 510 in a direction perpendicular to the first direction X, and $Rm_1 * S_1$ represents the maximum tolerable impact force on a cross section of the shaft portion 510 in a direction perpendicular to the first direction X; and $Rm_2$ is tensile strength of the fastening member 600, $S_2$ is a cross-sectional area of the fastening member 600 in a direction perpendicular to the first direction X, and $Rm_1 * S_1$ represents the maximum tolerable impact force on a cross section of the fastening member in a direction perpendicular to the first direction X.

In this embodiment, the tensile strength $Rm_2$ of the fastening member 600 is greater than the tensile strength $Rm_1$ of the conductive member 500, and the cross-sectional area $S_2$ of the fastening member 600 in a direction perpendicular to the first direction X is greater than a first cross-sectional area $S_1$ of the shaft portion 510 in a direction perpendicular to the first direction X, which can effectively reduce a risk of cracking of the fastening member 600. For example, in some embodiments, the material of the conductive member 500 includes aluminum alloy, and the material of the fastening member 600 includes stainless steel. This can ensure that the tensile strength of the fastening member 600 is greater than the tensile strength of the conductive member 500. Certainly, in another embodiment of this application, the materials of the conductive member 500 and the fastening member 600 may alternatively be adjusted adaptively on the foregoing basis. A diameter of the shaft portion 510 of the conductive member 500 is $D_1$, a diameter of an outer contour of the fastening member 600 is $D_2$, and the shaft portion 510 and the fastening member 600 satisfy

$$D_2/D_1 > \sqrt{2}$$

. In this way, the cross-sectional area $S_2$ of the foregoing fastening member 600 is greater than a cross-sectional area $S_1$ of the conductive member 500. For example, in some embodiments, the diameter $D_1$ of the shaft portion 510 is 2.0 millimeters (mm), the diameter $D_3$ of the restraint portion 520 is 4.0 mm, and the diameter $D_2$ of the outer contour of the fastening member 600 is 6 mm. It can be understood that even though the shaft portion 510 and the fastening member 600 each use a cylindrical structure in this embodiment, this application is actually not limited thereto. In another embodiment of this application, a contour of a cross section of the shaft portion 510 and/or the fastening member 600 in a direction perpendicular to the foregoing first direction X may alternatively be in any shape other than a circle, for example, quadrilateral, hexagon, octagon, or arch. Correspondingly, the shaft portion 510 and the fastening member 600 are corresponding columnar structures, and in this case, still preferably, the cross-sectional area $S_2$ of the fastening member 600 in a direction perpendicular to the first direction X is greater than the first cross-sectional area $S_1$ of the conductive member 500 in a direction perpendicular to the first direction X. In addition, even though the fastening member 600 and the conductive member 500 satisfy both conditions: $S_2 > S_1$ and $Rm_2 > Rm_1$ in this embodiment, only one of the conditions may alternatively be satisfied in another embodiment of this application. Because the tensile strength Rm of the material of the element and the cross-sectional area S of the fitting portion are positively correlated with impact resistance of the element, controlling $S_2$ to be greater than $S_1$ helps to ensure that impact resistance of the fastening member 600 can still be greater than impact resistance of the conductive member 500 even if the tensile strength $Rm_2$ of the fastening member 600 is less than the tensile strength $Rm_1$ of the conductive member 500 in some cases. In other words, setting $S_2$ to be greater than $S_1$ allows for more diversified and flexible selection of material for the fastening member 600. Likewise, controlling $Rm_2$ to be greater than $Rm_1$ helps to ensure that impact resistance of the fastening member 600 can still be greater than impact resistance of the conductive member even if the cross-sectional area $S_2$ of the fastening member 600 at the fitting portion is less than the cross-sectional area $S_1$ of the conductive member 500 at the fitting portion in some cases. In other words, setting $Rm_2$ to be greater than $Rm_1$ allows for more flexible size design during designing and a larger size tolerance during manufacture for the fastening member 600.

In addition, the hard shell battery 1 further includes a first conductive sheet 240 and a second conductive sheet 250, where the first conductive sheet 240 is configured to electrically connect the electrode assembly 200 to the conductive member 500, and the second conductive sheet 250 is configured to electrically connect the electrode assembly 200 to the housing 100. Specifically, the first conductive sheet 240 is a sheet structure; and the foregoing first electrode plate 210 is electrically connected to one end of the first conductive sheet 240, and at least one of the foregoing shaft portion 510 or the fastening member 600 is electrically connected to the other end of the first conductive sheet 240. The "electrical connection" mentioned in this application means that two components are connected directly or indirectly and that the two components are electrically interconnected. Manners of the "electrical connection" between the two components include but are not limited to bonding via an adhesive layer or an adhesive tape in a way that they are in contact, fastening via welding, and bonding and fastening via a conductive adhesive. The foregoing second conductive sheet 250 is also a sheet structure and is electrically connected to both the foregoing second electrode plate 220 and the housing 100.

Further, to reduce a risk of a short circuit of the hard shell battery 1 caused by contact between an edge of the conductive member 500 and the cover 120, projection of a peripheral contour of the restraint portion 520 in a first direction X falls on the first gasket 300. In this way, it can be ensured that the restraint portion 520 is located entirely on a side of the first gasket 300 facing away from the through hole 102, to reduce or avoid a risk of contact between the edge of the conductive member 500 and the housing 100, thereby achieving the foregoing objective. Likewise, to reduce a risk of a short circuit of the hard shell battery 1 caused by contact between an edge of the fastening member 600 and the cover 120, projection of a peripheral contour of the fastening member 600 in the first direction X falls on the second gasket 400. In this way, it can be ensured that the fastening member 600 is located entirely on a side of the second gasket 400 facing away from the through hole 102, to reduce or avoid a risk of contact between the edge of the fastening member 600 and the housing 100, thereby achieving the foregoing objective.

The hard shell battery 1 provided in this embodiment of this application includes the housing 100, the electrode assembly 200, the insulative first gasket 300, the insulative second gasket 400, the conductive member 500, and the fastening member 600. The first gasket is disposed on the outer surface of the housing 100, and the second gasket 400 is disposed on the inner surface of the housing. The conductive member 500 is electrically connected to the electrode assembly 200. The shaft portion 510 of the conductive member 500 passes through the first gasket 300, the through hole 102 of the housing 100, and the second gasket 400 and extends into the accommodating cavity 101. The restraint portion 520 of the conductive member 500 abuts on a side of the first gasket 300 facing away from the accommodating cavity 101. The fastening member 600 is disposed on a side of the second gasket 400 facing away from the through hole 102, and in interference fit with the shaft portion 510 via the mounting hole 601, to jointly press against the first gasket 300 and the second gasket 400, thereby sealing the through hole 102.

As compared with currently commercially available hard shell batteries, the conductive member 500 in the hard shell battery 1 provided in this embodiment of this application penetrates through the wall portion of the housing 100 and is connected to the electrode assembly 200, forming a conductive terminal of the hard shell battery. Because the conductive member 500 forms a conductive terminal of the hard shell battery 1, the housing 100 of the hard shell battery 1 may not necessarily be divided into two parts insulated from each other to form two conductive terminals. That is, the hard shell battery 1 provided in some embodiments of this application can change a current situation in which a housing of an existing hard shell battery needs to be divided into at least two parts insulated from each other to form two conductive terminals.

In addition, in the hard shell battery 1, clamping force between the conductive member 500 and the fastening member 600 presses tight the first gasket 300 and the second gasket 400 to seal the foregoing through hole. In addition, the mechanical clamping force is less affected by an increase in temperature of the hard shell battery. Therefore, compared with the currently commercially available hard shell batteries that are likely to experience electrolyte leakage at a mounting position of the top cover, namely, the conductive terminal, of the housing, the hard shell battery 1 provided in this embodiment of this application is less likely to experience electrolyte leakage at a mounting position of the conductive member. Finally, it should be noted that in another embodiment of this application, on the basis of the foregoing embodiments, an end of the shaft portion facing away from the restraint portion 520 may alternatively exceed the fastening member 600, the end of the shaft portion 510 facing away from the restraint portion 520 is pressed through a riveting process so as to extend outwards to form a fastening portion, and the fastening portion and the restraint portion are disposed at two opposite ends of the shaft portion 510. The restraint portion 520 presses against the first gasket 300, and the fastening portion indirectly presses against the second gasket 400 by pressing against the fastening member 600, to seal the through hole 102. However, compared with the foregoing embodiments, in this embodiment, the conductive member 500 needs to be deformed, and therefore, in this embodiment, a larger pressing force needs to be applied during the assembly of the conductive member 500. This increases assembly difficulty of the conductive member 500 and the fastening member 600. In addition, the fastening portion occupies additional space in the accommodating cavity 101, thereby reducing energy density of the hard shell battery 1.

Referring to FIG. 4, FIG. 4 shows an electronic apparatus 2 according to another embodiment of this application. The electronic apparatus 2 includes the hard shell battery 1 in any one of the foregoing embodiments.

In this embodiment, the electronic apparatus 2 is a mobile phone. It can be understood that in another embodiment of this application, the electronic apparatus 2 may alternatively be a tablet computer, a computer, an unmanned aerial vehicle, and other electronic devices that need to be driven by electricity.

With the foregoing hard shell battery 1 included, the electronic apparatus 2 can change a current situation in which a housing of a hard shell battery in an existing electronic device needs to be divided into at least two parts insulated from each other to form two conductive terminals.

Finally, it should be noted that the foregoing embodiments are merely intended to describe the technical solutions of this application, and are not intended to limit this application. Under the idea of this application, the foregoing embodiments or the technical features in different embodiments can also be combined, the steps can be implemented in any order, and there are many other changes in different aspects of this application as described above, which, for the sake of brevity, are not provided in detail. Although this application is described in detail with reference to the foregoing embodiments, persons of ordinary skill in the art should understand that modifications can be made to the technical solutions described in the foregoing embodiments, or equivalent substitutions can be made to some technical features therein, and these modifications or substitutions do not make the essence of the corresponding technical solutions depart from the scope of the technical solutions of the embodiments of this application.

## Claims

1. A hard shell battery, comprising a housing and an electrode assembly, wherein the housing is provided with an accommodating cavity, and the electrode assembly is accommodated in the accommodating cavity, wherein the hard shell battery further comprises:

   an insulative first gasket disposed on an outer surface of the housing;
   an insulative second gasket disposed on an inner surface of the housing;
   a conductive member comprising a shaft portion and a restraint portion, wherein the shaft portion passes through the first gasket, a wall portion of the housing, and the second gasket in sequence and extends into the accommodating cavity, the housing is provided with a through hole for passage of the shaft portion, an end of the shaft portion facing away from the accommodating cavity extends outward to form the restraint portion, the restraint portion abuts on a side of the first gasket facing away from the accommodating cavity, and the conductive member is electrically connected to the electrode assembly; and
   a fastening member disposed on a side of the second gasket facing away from the first gasket, wherein the fastening member is provided with a mounting hole, the shaft portion is in an interference fit with the mounting hole, and the conductive member and the fastening member jointly press against the second gasket and the conductive member and the housing jointly press against the first gasket, to seal the through hole.

2. The hard shell battery according to claim 1, wherein tensile strength of the conductive member is $Rm_1$, a cross-sectional area of the shaft portion in a direction perpendicular to a first direction is $S_1$, tensile strength of the fastening member is $Rm_2$, a cross-sectional area of the fastening member in a direction perpendicular to the first direction is $S_2$, and the first direction is an extension direction of the shaft portion; and
   the conductive member and the fastening member satisfy $Rm_2 * S_2 > Rm_1 * S_1$.

3. The hard shell battery according to claim 1, wherein a cross-sectional area of the shaft portion in a direction perpendicular to a first direction is $S_1$, and a cross-sectional area of the fastening member in a direction perpendicular to the first direction is $S_2$; and
   the conductive member and the fastening member satisfy $S_2 > S_1$.

4. The hard shell battery according to claim 3, wherein the shaft portion is cylindrical, and the fastening member is ring-shaped; and
   a diameter of the shaft portion is $D_1$, a diameter of an outer contour of the fastening member is $D_2$, and the shaft portion and the fastening member satisfy

   $$D_2/D_1 > \sqrt{2}.$$

5. The hard shell battery according to claim 1, wherein tensile strength of the fastening member is greater than tensile strength of the shaft portion.

6. The hard shell battery according to claim 1, wherein projection of a peripheral contour of the restraint portion in a first direction falls on the first gasket, and/or projection of a peripheral contour of the fastening member in the first direction falls on the second gasket, wherein
   the first direction is an extension direction of the shaft portion.

7. The hard shell battery according to claim 1, further comprising an insulating sleeve, wherein
   the insulating sleeve fits on the shaft portion and is between the first gasket and the second gasket.

8. The hard shell battery according to claim 7, wherein the insulating sleeve is in an interference fit with the through hole.

9. The hard shell battery according to claim 7, wherein the insulating sleeve and the first gasket are integrally formed; and/or
the insulating sleeve and the second gasket are integrally formed.

10. The hard shell battery according to claim 1, wherein the fastening member is a conductor; and
the hard shell battery further comprises a first conductive sheet, one end of the first conductive sheet is electrically connected to the electrode assembly, and at least one of the shaft portion or the fastening member is electrically connected to the other end of the first conductive sheet.

11. The hard shell battery according to claim 10, wherein the electrode assembly comprises a first electrode plate, a second electrode plate, and a separator that are stacked, and the separator is disposed between the first electrode plate and the second electrode plate;

the first conductive sheet is electrically connected to the first electrode plate; and
the housing is a conductor, the hard shell battery further comprises a second conductive sheet, and the second conductive sheet is electrically connected to both the second electrode plate and the housing.

12. An electronic apparatus, comprising the hard shell battery according to any one of claims 1 to 11.

FIG. 1

FIG. 2

FIG. 3

FIG. 4

## INTERNATIONAL SEARCH REPORT

| International application No. |
| --- |
| **PCT/CN2021/134473** |

**A. CLASSIFICATION OF SUBJECT MATTER**

H01M 50/528(2021.01)i; H01M 50/184(2021.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

WPI, EPODOC, CNPAT, CNKI: 电池, 电芯, 密封, 铆, 固定, 孔, 压, 极柱, 端子, 导电, cell, batter+, core, seal+, rivet+, hole, pore, press+, pole, terminal, conduct+

**C. DOCUMENTS CONSIDERED TO BE RELEVANT**

| Category* | Citation of document, with indication, where appropriate, of the relevant passages | Relevant to claim No. |
| --- | --- | --- |
| X | CN 101707238 A (HUIZHOU DESAY LITHIUM TECHNOLOGY CO., LTD.) 12 May 2010 (2010-05-12) description, paragraphs 0004-0017, and figures 1-3 | 1-12 |
| X | CN 112956075 A (HITACHI AUTOMOTIVE SYSTEMS LTD.) 11 June 2021 (2021-06-11) description, paragraphs 0011-0066, and figures 1-5 | 1-12 |
| X | JP 2005056649 A (HITACHI MAXELL) 03 March 2005 (2005-03-03) description, paragraphs 0008-0046, and figures 1-5 | 1-12 |
| A | CN 107026248 A (GS YUASA INTERNATIONAL LTD.) 08 August 2017 (2017-08-08) entire document | 1-12 |

☐ Further documents are listed in the continuation of Box C. ☑ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **17 August 2022** | **25 August 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/134473**

| Patent document cited in search report | | | Publication date (day/month/year) | Patent family member(s) | | | Publication date (day/month/year) |
|---|---|---|---|---|---|---|---|
| CN | 101707238 | A | 12 May 2010 | None | | | |
| CN | 112956075 | A | 11 June 2021 | WO | 2020066050 | A1 | 02 April 2020 |
| | | | | JP | WO2020066050 | A1 | 13 May 2021 |
| | | | | US | 2021159563 | A1 | 27 May 2021 |
| | | | | EP | 3767707 | A1 | 20 January 2021 |
| JP | 2005056649 | A | 03 March 2005 | None | | | |
| CN | 107026248 | A | 08 August 2017 | DE | 102017200823 | A1 | 27 July 2017 |
| | | | | JP | 2017130386 | A | 27 July 2017 |
| | | | | US | 2017214030 | A1 | 27 July 2017 |

Form PCT/ISA/210 (patent family annex) (January 2015)